# EUROPÄISCHE PATENTSCHRIFT

(11) **EP 0 674 678 B1**
(45) Veröffentlichungstag und Bekanntmachung des Hinweises auf die Patenterteilung: **10.03.1999**
(21) Anmeldenummer: 94929470.6
(22) Anmeldetag: 14.10.1994
(51) Int. Cl.: C08J 3/03

(54) **VERFAHREN ZUR HERSTELLUNG VON WASSERLÖSLICHEN POLYMERDISPERSIONEN MIT HOHEM POLYMERANTEIL**
METHOD OF PRODUCING WATER-SOLUBLE POLYMER DISPERSIONS CONTAINING A HIGH CONCENTRATION OF POLYMER
PROCEDE DE PRODUCTION DE DISPERSIONS POLYMERES SOLUBLES DANS L'EAU A FORTE TENEUR EN POLYMERES

(30) Priorität: 19.10.1993 DE 4335567
(43) Veröffentlichungstag der Anmeldung: 04.10.1995
(73) Patentinhaber: Stockhausen GmbH & Co. KG, 47705 Krefeld (DE)
(72) Erfinder: SCHMITT, Günter, D-64291 Darmstadt (DE); CARL, Joachim, D-64291 Darmstadt (DE); BRAUM, Manfred, D-55124 Mainz-Gonsenheim (DE); QUIS, Peter, D-64289 Darmstadt (DE); SCHLIESSMANN, Petra, D-64293 Darmstadt (DE)
(86) Internationale Anmeldenummer: DE9401214
(87) Internationale Veröffentlichungsnummer: WO9511269

(56) Entgegenhaltungen:
- EP-A- 0 262 945

## Beschreibung

### Gebiet der Erfindung

Die Erfindung betrifft ein mindestens dreistufiges Verfahren zur Erhöung des Wirkstoffanteils bei der Herstellung niedrigviskoser, wasserlöslicher Polymerdispersionen PD mit hohem Wirkstoffgehalt, enthaltend mindestens ein polymeres Dispergiermittel D) und ein Polymerisat A) betstehend aus a1) mindestens einem wasserlöslichen Monomeren, a2) mindestens einem hydrophoben Monomeren und gegebenenfalls a3) mindestens einem amphiphilen Monomeren.

### Stand der Technik

Wäßrige Dispersionen wasserlöslicher Polymerisate werden beispielsweise als Flockungsmittel bei der Abwasserbehandlung, als Entwässerungsmittel nach Abtrennung der wäßrigen Phase, als Retentionsmittel bei der Papierherstellung, als Bodenverbesserungsmittel oder als Dispergiermittel eingesetzt.
EP 170 394 beschreibt eine mit Wasser mischbare Flüssigkeit, bestehend aus Partikeln, aufgebaut aus einem hochmolekularen Polymergel, das Teilchengrößen von über 20 µm aufweist, in wäßriger Lösung als kontinuierlicher Phase, die ein Äquilibrierungsmittel enthält, das den Wassergehalt der Gelpartikel mit dem Wasseranteil in der kontinuierlichen Phase im Gleichgewicht hält und das somit eine Agglomeration der Gelpartikel verhindert. Als bevorzugte Äquilibrierungsmittel werden das Natriumsalz der Polyacrylsäure bzw. Polydiallyldimethylammoniumchlorid (Poly-DADMAC) verwendet.
In EP 183 466 wird ein Verfahren zur Herstellung einer wasserlöslichen Polymerdispersion beschrieben, gekennzeichnet durch das Polymerisieren eines wasserlöslichen Monomeren unter Rühren in einer wäßrigen Lösung von wenigstens einem Salz in Gegenwart eines Dispergiermittels. Hierbei finden Polyole,
Polyalkylenether, Alkalisalze der Polyacrylsäure sowie Alkalisalze der Poly-2-Acrylamido-2-methylpropansulfonsäure als Dispergiermittel Verwendung.
DE-PS 29 44 663 umfaßt ein Verfahren zur Herstellung einer wäßrigen Dispersion aus einem wasserlöslichen Polymerisat mit guter Stabilität und Fließfähigkeit, wobei das wasserlösliche Polymerisat wenigstens ein wasserlösliches ethylenisch ungesättigtes Monomeres enthält und wobei als Dispergiermittel Polyalkylenether, Polyethylenimin und andere Polymerisate anwesend sein können. Die solchermaßen hergestellte wäßrige Dispersion kann, gegebenenfalls nach Verdünnen mit Wasser als Flockungshilfsmittel, Verdickungsmittel, Bodenkonditionierungsmittel und für weitere Anwendungen eingesetzt werden.
In JP Kokkai 59 108 074 werden Verdickungsmittel beschrieben, bestehend aus Polymerisaten in wäßriger Lösung, die als monomere Bestandteile (Meth)acrylsäure und/oder deren Salze, (Meth)acrylamide sowie Methyl- oder Ethylacrylat enthalten, mit Polyethylenglykol als Dispergiermittel.
Die deutsche Patentanmeldung P 42 16 167.3 beschreibt wäßrige Dispersionen wasserlöslicher Polymerisate, gebildet durch Polymerisation eines Gemisches bestehend aus wasserlöslichen, hydrophoben und gegebenenfalls amphiphilen Monomeren in Gegenwart eines polymeren Dispergiermittels. Ein zweistufiges Verfahren zur Herstellung von niedrigviskosen wäßrigen Dispersionen wasserlöslicher Polymerisate gemäß der deutschen Patentanmeldung P 42 16 167.3 mit erhöhtem Gehalt an Wirksubstanz wird von der deutschen Patentanmeldung P 43 16 200.2 umfaßt.

### Aufgabe und Lösung

Die in EP 170 394 beschriebenen, Gelpartikel enthaltenden, wäßrigen Lösungen haben zum Nachteil, daß sie nach längeren Standzeiten stark erhöhte Viskositäten aufweisen, die nur durch die Anwendung von Schergefällen, wie beispielsweise intensives Rühren, reduziert werden können. Die rheologischen Eigenschaften hängen hierbei von einem komplexen Gleichgewicht zwischen Polymerisat,
Äquilibrierungsmittel, Wassergehalt und Teilchengröße der Gelpartikel ab.
In EP 183 466 werden wasserlösliche Polymerisate als Dispersionen in wäßrigen Salzlösungen unter Zuhilfenahme eines Dispergiermittels beansprucht. Nachteilig bei diesen Dispersionen ist der hohe Salzgehalt der wäßrigen Phase (bis zu 30 Gew.-%) im Vergleich zu einem relativ geringen Polymerisat(= Wirkstoff-)gehalt (bis zu 20 Gew.-%), der bei bestimmten Anwendungen solcher Dispersionen zu Abwasserproblemen führt.
Oftmals prohibitiv für die Verwendung von wäßrigen Dispersionen gemäß DE-PS 29 24 663 wirken sich die hohen Anteile an Dispergiermittel bezogen auf das wasserlösliche Polymerisat aus. Verwendet man solche Dispersionen beispielsweise als Flockungsmittel für elektrisch geladene Teilchen, so wird die Wirkung der hochmolekularen ionischen Polymeren durch das im Vergleich hierzu niedermolekulare Dispergiermittel reduziert.
Gemäß JP Kokkai 59 108 075 hergestellte Polymerisate mit Verdickungswirkung besitzen mittlere Molekulargewichte M_{w} zwischen etwa 10⁵ und 5 x 10⁵ Dalton (Gewichtsmittel), die für die Verwendung als Flockungsmittel deutlich zu niedrig sind. Die aus dem o.a. Stand der Technik resultierende Aufgabe, wäßrige Dispersionen wasserlöslicher Polymerisate zur Verfügung zu stellen, die eine niedrige Viskosität, einen hohen Gehalt an Polymerisat-Wirkstoff, ein hohes Polymerisat-Molekulargewicht sowie eine Salz-freie Wasserphase aufweisen, wird von den erfindungsgemäßen Polymeren in wäßriger Dispersion gemäß der deutschen Patentanmeldung P 42 16 167.3 gelöst. Darüber hinaus stellt die deutsche Patentanmeldung P 43 16 200.2 ein zweistufiges Verfahren zur Verfügung, nach dem die in P 42 16 167.3 realisierten niedrigen Viskositäten bzw. hohen Gehalte an Polymerisat-Wirkstoff mit hohem Molekulargewicht noch weiter reduziert (Viskosität) bzw. erhöht (Wirkstoffgehalt und/oder Molekulargewicht) werden können.
Dennoch bestand weiterhin die Aufgabe, im Parameterfeld Viskosität der wäßrigen Dispersion, hoher Gehalt an Polymerisat-Wirkstoff und hohes Polymerisat-Molekulargewicht nach besseren Lösungen zu suchen.
Überraschenderweise wurde gefunden, daß ein mindestens dreistufiges Verfahren zur Erhöhung des Wirkstoffanteils bei der Herstellung niedrigviskoser, wasserlöslicher Polymerdispersionen PD, die in ihrem Aufbau den Polymerdispersionen entsprechen, wie sie in P 42 16 167.3 beschrieben werden, diese Aufgabe noch besser löst als das in P 43 16 200.2 beschriebene Herstellungsverfahren. Das erfindungsgemäße Verfahren umfaßt folgende Stufen:
1. Herstellung einer wäßrigen Dispersion PD wasserlöslicher Polymerisate A) durch die Polymerisation verschiedener Monomerbestandteile a1), a2) und gegebenenfalls a3) in Gegenwart eines polymeren Dispergiermittels D) gemäß P 42 16 167.3. Dabei stehen:
   a1) für 99 bis 70 Gew.-% mindestens eines wasserlöslichen Monomeren,
   a2) für 1 bis 30 Gew.-% mindestens eines hydrophoben Monomeren und
   a3) für 0 bis 20 Gew.-%, vorzugsweise 0,1 bis 15 Gew.-%, mindstens eines amphiphilen Monomeren,
   und die wasserlöslichen Polymerisate A) weisen ein mittleres Molekulargewicht M_{w} (Gewichtsmittel) von mindestens 5.10⁵ Dalton auf. Danach wird eventuell gemäß P 43 16 200.2 eine wäßrige Dispersion mindestens eines polymeren Dispergiermittels D) zugegeben. Als polymere Dispergiermittel D) werden bevorzugt mit dem dispergierten Polymerisat A) unverträgliche Polyelektrolyte mit mittleren Molekulargewichten M_{w} < 5 x 10⁵ Dalton oder Polyalkylenether eingesetzt.
2. In der zweiten Stufe wird der gemäß P 42 16 167.3 oder P 43 16 200.2 hergestellten wäßrigen Polymerdispersion PD) Wasser entzogen, bis deren Viskosität etwa der Viskosität von Polymerdispersionen entspricht, wie sie nach P 42 16 167.3 gewonnen werden. Dies kann beispielsweise durch Destillation bei Normaldruck oder im Vakuum erfolgen.
3. Die dritte Stufe des erfindungsgemäßen Verfahrens umfaßt wiederum die Zugabe einer wäßrigen Dispersion mindestens eines polymeren Dispergiermittels D), das den Kriterien des in Stufe 1 verwendeten entspricht.

Mit den erfindungsgemäßen Stufen 2 und 3 des hier beschriebenen Verfahrens lassen sich die Wirkstoffgehalte von wäßrigen Polymerdispersionen, wie sie nach P 43 16 200.2 hergestellt werden, deutlich steigern, beispielsweise um etwa 50 %.

In bevorzugten Ausführungen der Erfindung weist mindestens eines der wasserlöslichen Monomeren a1) mindestens eine ionische Gruppe auf, ist das hydrophobe Monomere a2) eine Verbindung der Formel I: 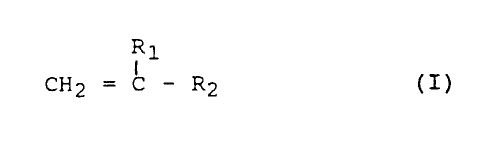 wobei
- R₁: für Wasserstoff oder Alkyl mit 1-4 Kohlenstoffatomen
- R₂: für Alkyl mit 1 bis 4 Kohlenstoffatomen, für Cycloalkyl mit 5 bis 12 Kohlenstoffatomen, für Aryl mit 6 bis 12 Kohlenstoffatomen, oder für 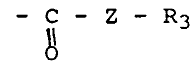 mit R₃ für Alkyl mit 1 bis 8 Kohlenstoffatomen und Z für O, -NH oder -NR₃
stehen kann.
Unter Aryl sei insbesondere ggfls. mit C1 bis C4-Alkylresten substituiertes Phenyl oder Naphthyl verstanden.

Das amphiphile Monomere a3) ist bevorzugt eine Verbindung der Formel II: 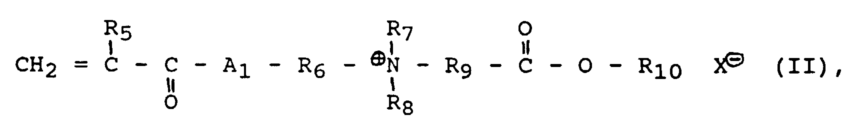 wobei
- A₁: für O, NH, NR₄ mit R₄ für Alkyl mit 1 bis 4 Kohlenstoffatomen,
- R₅: für Wasserstoff oder Methyl
- R₆: für Alkylen mit 1 bis 6 Kohlenstoffatomen,
- R₇: und R₈ unabhängig voneinander für Alkyl mit 1 bis 6 Kohlenstoffatomen
- R₉: für Alkylen mit 1 bis 6 Kohlenstoffatomen
- R₁₀: für Alkyl mit 8 bis 32 Kohlenstoffatomen
sowie X für Halogen, Pseudohalogen, SO₄CH₃, Acetat
stehen können; hierbei steht Pseudohalogen für -CN-, -OCN-und -SCN-Gruppen,
oder eine Verbindung der Formel III: 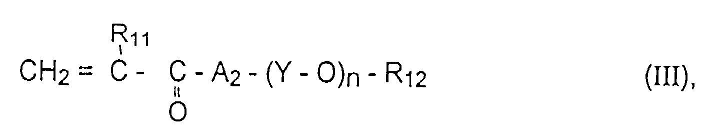
wobei R₁₁ für Wasserstoff oder Methyl
R₁₂ für Alkyl mit 8 bis 32 Kohlenstoffatomen,
Y für Alkylen mit 2 bis 6 Kohlenstoffatomen,
A₂ für O, NH, NR₁₃ mit R₁₃ = Alkyl mit 1 bis 4 Kohlenstoflatomen und
n für eine ganze Zahl zwischen 1 und 50
stehen können.

### Durchführung der Erfindung

Als Monomere a1) können beispielsweise Salze der Acryl-, und/oder Methacrylsäure der allgemeinen Formel IV eingesetzt werden: 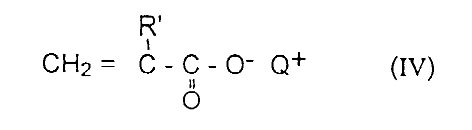 wobei
- R': für Wasserstoff oder Methyl und
- Q^{⊕}: für Alkalimetallionen, wie beispielsweise Na^{⊕} oder K^{⊕}, Ammoniumionen, wie beispielsweise NH₄^{⊕}, ^{⊕}NR"₂H₂, ^{⊕}NR"₃H oder ^{⊕}NR"₄ mit R" = Alkyl mit 1 bis 6 Kohlenstoffatomen oder weitere einwertige, positiv geladene Ionen
stehen können.

Zu Monomeren a1) der Formel IV gehören beispielsweise Natrium(meth)acrylat, Kalium(meth)acrylat oder Ammonium(meth)acrylat.

Desweiteren können beispielsweise die Acryl- und/oder die Methacrylsäure selbst als Monomerkomponente a1), sowie Methacrylamide der Formel V verwendet werden: 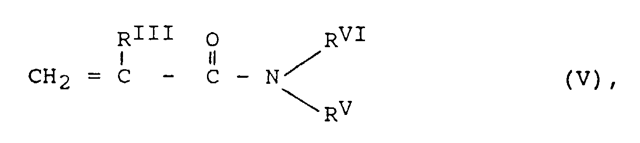 wobei
- R^{III}: für Wasserstoff oder Methyl, sowie
- R^{IV} und R^{V}: unabhängig voneinander für Wasserstoff, für Alkyl mit 1 bis 5 Kohlenstoffatomen
stehen können.

Als Monomere a1) der Formel V seien beispielhaft genannt: (Meth)acrylamid, N-Methyl(meth)acrylamid, N,N-Dimethyl(meth)acrylamid, N,N-Diethyl(meth)acrylamid, N-Methyl-N-ethyl(meth)acrylamid sowie N-Hydroxyethyl(meth)acrylamid. Zur Herstellung der (Meth)acrylamide vergleiche beispielsweise Kirk-Othmer, Encyclopedia of Chemical Technology, Vol. 15, Seiten 346 bis 376, 3rd. Ed., Wiley Interscience, 1981.
Weiterhin können als Monomerkomponente a1) Monomere der Formel VI eingesetzt werden: 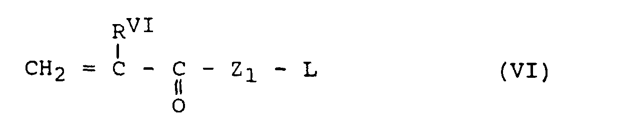 wobei
- R^{VI}: für Wasserstoff oder Methyl
- L: für die Gruppen 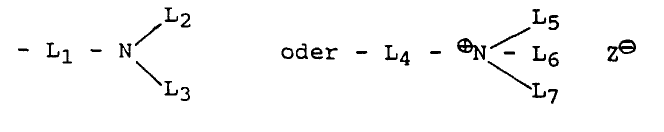
stehen und
- Z₁: für 0, NH oder NR₄
wobei
- L₁ und L₄: für einen Alkylenrest oder Hydroxyalkylenrest mit 2 bis 6 Kohlenstoffatomen, L₂, L₃, L₅, L₆ und L₇ für einen Alkylrest mit 1 bis 6 Kohlenstoffatomen, sowie Z für Halogen, Acetat, SO₄CH₃ stehen können.

Beispielhaft für Monomere a1) der Formel VI seien genannt: 2-(N,N-Dimethylamino)ethyl(meth)acrylat, 3-(N,N-Dimethylamino)propyl(meth)acrylat, 4-(N,N-Dimethylamino)butyl(meth)acrylat, 2-(N,N-Diethylamino)ethyl(meth)acrylat, 2-Hydroxy-3-(N,N-dimethylamino)propyl(meth)acrylat, 2-(N,N,N-Trimethylammonium)ethyl(meth)acrylat-chlorid, 3-(N,N,N-Trimethylammonium)propyl(meth)acrylat-chlorid oder 2-Hydroxy-3-(N,N,N-Trimethylammonium)propyl(meth)acrylatchlorid bzw. die (Meth)acrylamide der o.g. Verbindungen, wie beispielsweise 2-Dimethylaminoethyl(meth)acrylamid, 3-Dimethylaminopropyl(meth)acrylamid oder 3-Trimethylammoniumpropyl(meth)acrylamid-chlorid. Als Monomerkomponente a1) können weiterhin ethylenisch ungesättigte Monomere, die zur Bildung von wasserlöslichen Polymeren befähigt sind, eingesetzt werden, wie beispielsweise Vinylpyridin, N-Vinylpyrrolidon, Styrolsulfonsäure, N-Vinylimidazol oder Diallyldimethylammoniumchlorid. Dabei sind auch Kombinationen verschiedener, unter a1) angeführter wasserlöslicher Monomeren möglich. Zur Darstellung der (Meth)acrylammonium-Salze vgl. beispielsweise Kirk-Othmer, Encyclopedia of Chemical Technology, Vol. 15, Seiten 346 bis 376, 3rd. Ed., Wiley Interscience, 1987.

Hydrophobe Monomere a2) können beispielsweise Monomere der Formel I sein: 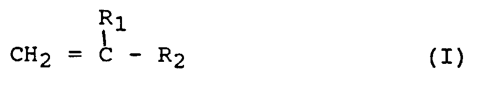 wobei
- R₁: für Wasserstoff oder Alkyl mit 1 bis 5 Kohlenstoffatomen und
- R₂: für Alkyl mit 1 bis 4 Kohlenstoffatomen, für Cycloalkyl mit 5 bis 12 Kohlenstoffatomen, für Aryl mit 6 bis 12 Kohlenstoffatomen, oder für 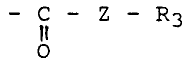 mit R₃ für Alkyl mit 1 bis 8 Kohlenstoffatomen, für Cycloalkyl mit 5 bis 12 Kohlenstoffatomen oder für Aryl mit 6 bis 12 Kohlenstoffatomen und Z für O, NH oder NR₃
stehen können.

Beispielhaft seien hierfür genannt: Styrol, α-Methylstyrol, p-Methylstyrol, p-Vinyltoluol, Vinylcyclopentan, Vinylcyclohexan, Vinylcyclooctan, Isobuten, 2-Methylbuten-1, Hexen-1, 2-Methylhexen-1, 2-Propylhexen-1, Ethyl(meth)acrylat, Propyl(meth)acrylat, Isopropyl(meth)acrylat, Butyl(meth)acrylat, Isobutyl(meth)acrylat, Pentyl(meth)acrylat, Hexyl(meth)acrylat, Heptyl(meth)acrylat, octyl(meth)acrylat, Cyclopentyl(meth)acrylat, Cyclohexyl(meth)acrylat, 3,3,5-Trimethylcyclohexyl(meth)acrylat, Cyclooctyl(meth)acrylat, Phenyl(meth)acrylat, 4-Methylphenyl(meth)acrylat, 4-Methoxyphenyl(meth)acrylat. Desweiteren können als hydrophobe Monomere a2) eingesetzt werden: Ethylen, Vinylidenchorid, Vinylidenfluorid, Vinylchlorid oder weitere, überwiegend (ar)aliphatische Verbindungen mit polymerisierbaren Doppelbindungen. Dabei sind auch Kombinationen verschiedener, unter a2) angeführter hydrophober Monomeren möglich. Amphiphile Monomere a3) können beispielsweise monomere Verbindungen der Formeln II oder III sein: 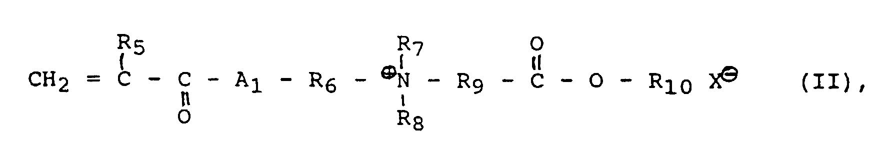 wobei
- A₁: für O, NH, NR₄ mit R₄ für Alkyl mit 1 bis 4 Kohlenstoffatomen,
- R₅: für Wasserstoff oder Methyl,
- R₆: für Alkylen mit 1 bis 6 Kohlenstoffatomen,
- R₇: und R₈ unabhängig voneinander für Alkyl mit 1 bis 6 Kohlenstoffatomen,
- R₉: für Alkylen mit 1 bis 6 Kohlenstoffatomen
- R₁₀: für Alkyl, Aryl und/oder Aralkyl mit 8 bis 32 Kohlenstoffatomen und
- X: für Halogen, Pseudohalogen, SO₄CH₃ oder Acetat
stehen können bzw. 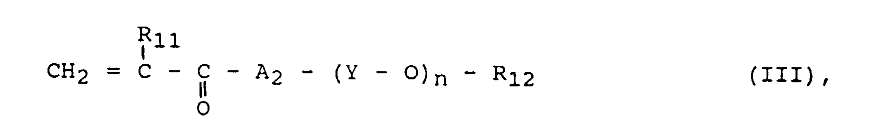 wobei
- A₂: für O, NH, NR₁₃ mit R₁₃ für Alkyl mit 1 bis 4 Kohlenstoffatomen,
- R₁₁: für Wasserstoff oder Methyl,
- R₁₂: für Alkyl, Aryl und/oder Aralkyl mit 8 bis 32 Kohlenstoffatomen,
- Y: für Alkylen mit 2 bis 6 Kohlenstoffatomen
sowie
- n: für eine ganze Zahl zwischen 1 und 50 stehen können.

Zur Herstellung der amphiphilen Monomeren der Formel II vergleiche beispielsweise Kirk-Othmer, Encyclopedia of Chemical Technology, Vol. 1, 3rd. Ed., Seiten 330 bis 354 (1978) und Vol. 15, Seiten 346 bis 376 (1981), Wiley Interscience.

Beispielhaft für Monomere der Formel III seien genannt:

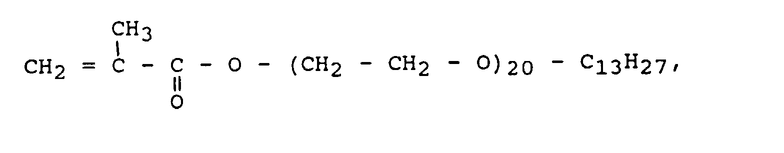

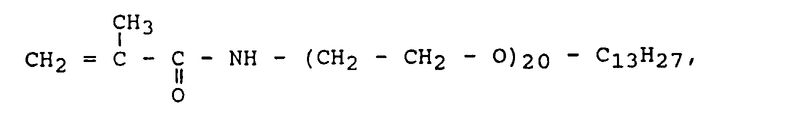

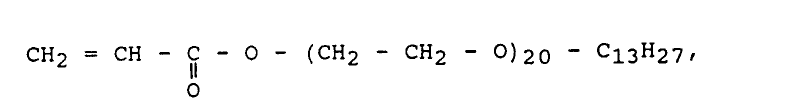

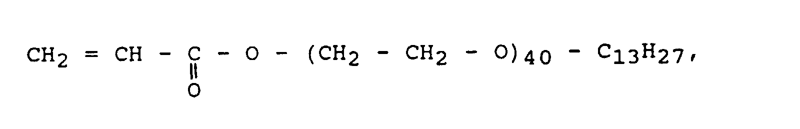

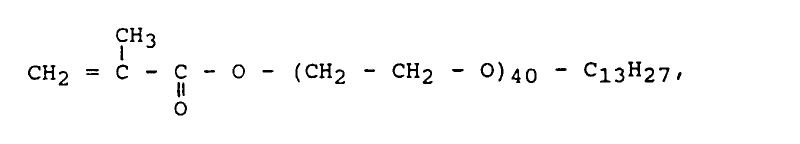

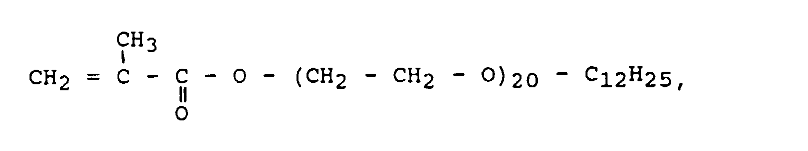

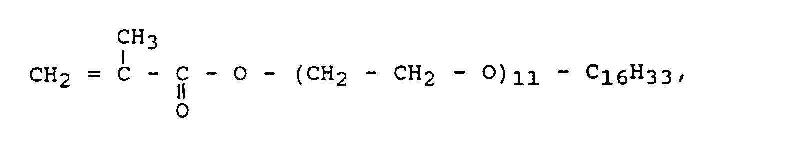

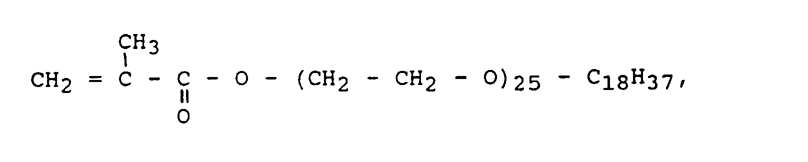

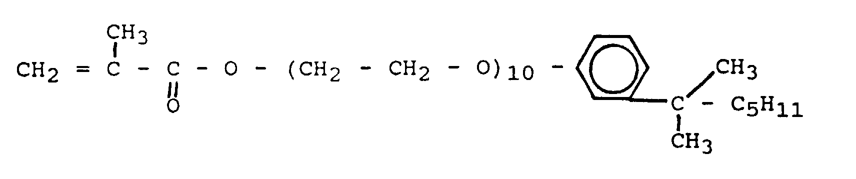

Desweiteren können als amphiphile Monomere a3) beispielsweise eingesetzt werden: 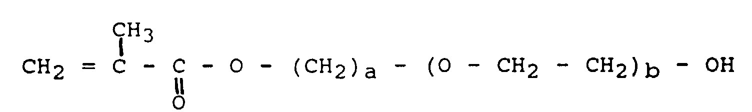 mit a = 6 bis 15 und b = 1 bis 50 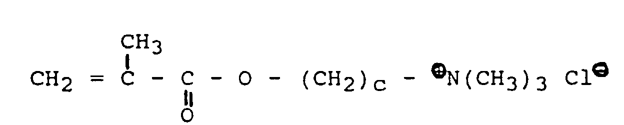 mit c = 6 bis 18 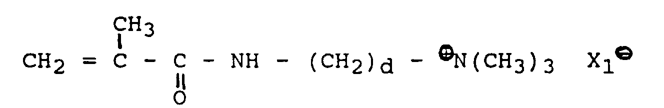 mit
- X₁^{⊖} =: Cl^{⊖} oder SO₄CH₃^{⊖} und
- d =: 6 bis 18
oder 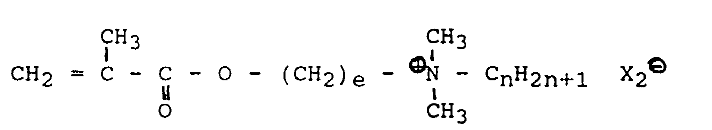 mit
- e =: 2 bis 6 und n = 6 bis 18
- X₂^{⊖} =: Cl^{⊖} oder SO₄CH₃^{⊖}

Dabei sind auch Kombinationen verschiedener, unter a3) angeführter, amphiphiler Monomeren möglich.

### Das polymere Dispergiermittel D)

Das polymere Dispergiermittel unterscheidet sich signifikant in der chemischen Zusammensetzung und im mittleren Molekulargewicht M_{w} (Gewichtsmittel) von dem wasserlöslichen Polymerisat, bestehend aus dem Monomerengemisch A), wobei das polymere Dispergiermittel D) mit dem wasserlöslichen Polymerisat unverträglich ist. Die mittleren Molekulargewichte M_{w} der polymeren Dispergiermittel liegen im Bereich zwischen 10³ bis 5 x 10⁵ Dalton, vorzugsweise zwischen 10⁴ bis 4 x 10⁵ Dalton (zur Bestimmung von M_{w} vgl. H.F. Mark et al., Encyclopedia of Polymer Science and Technology, Vol. 10, Seiten 1 bis 19, J. Wiley, 1987).
Die polymeren Dispergiermittel D) enthalten wenigstens eine funktionelle Gruppe ausgewählt aus Ether-, Hydroxyl-, Carboxyl-, Sulfon-, Sulfatester-, Amino-, Amido-, Imido-, tert.-Amino- und/oder quaternären Ammoniumgruppen. Beispielhaft für die Polymerisate D) seien genannt: Cellulosederivate, Polyethylenglykol, Polypropylenglykol, Copolymerisate aus Ethylenglykol und Propylenglykol, Polyvinylacetat, Polyvinylalkohol, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin, sowie Copolymerisate, die neben Kombinationen aus monomeren Bausteinen o.g. Polymerisate beispielsweise folgende Monomereinheiten enthalten können: Maleinsäure, Maleinsäureanhydrid, Fumarsäure, Itakonsäure, Itakonsäure-anhydrid, (Meth)acrylsäure, Salze der (Meth)acylsäure oder (Meth)acrylamid-Verbindungen. Bevorzugt werden als polymere Dispergiermittel D) Polyalkylenether wie beispielsweise Polyethylenglykol, Polypropylenglykol oder Polybutylen-1,4-ether eingesetzt. Zur Herstellung von Polyalkylenethern vergleiche beispielsweise Kirk-Othmer, Encyclopedia of Chemical Technology, 3rd. Ed., Vol. 18, Seiten 616 bis 670, 1982, Wiley Interscience.

Besonders bevorzugt werden als polymere Dispergiermittel D) Polyelektrolyte verwendet, wie beispielsweise Polymerisate, enthaltend Monomerbausteine wie z.B. Salze der (Meth)acrylsäure als anionische Monomerbausteine oder mit Methylchlorid quaternierte Derivate von N,N-Dimethylaminoethyl(meth)acrylat, N,N-Dimethylaminopropyl(meth)acrylat oder N,N-Dimethylaminohydroxypropyl(meth)acrylat oder N,N-Dimethylaminopropyl(meth)acrylamid. Ganz besonders bevorzugt wird Poly(diallyldimethylammoniumchlorid) (Poly-DADMAC) mit einem mittleren Molekulargewicht M_{w} zwischen 5 x 10⁴ und 4 x 10⁵ Dalton als polymeres Dispergiermittel eingesetzt. Zur Herstellung von Polyelektrolyten vergleiche beispielsweise Kirk-Othmer, Encyclopedia of Chemical Technology, 3rd. Ed. Vol. 18, Seiten 495 bis 530, 1982, Wiley Interscience.

Desweiteren können niedermolekulare Emulgatoren mit einem Molekulargewicht < 10³ Dalton in Mengen von 0 bis 5 Gew.-% bezogen auf die Polymerdispersion eingesetzt werden.

Das dreistufige Herstellungsverfahren

### 1. Stufe:

Herstellung und eventuelle Verdünnung der wäßrigen Polymerdispersion PD) enthaltend Polymerisat A) und polymeres Dispergiermittel D)

Die Menge des Monomerengemisches a1), a2) und ggfls. a3) bezogen auf 100 Gew.-Teile Wasser als Reaktionsmedium liegt im allgemeinen zwischen 5 und 80 Gew.-Teilen, vorzugsweise zwischen 10 und 50 Gew.-Teilen. Werden Monomere a1) und ggfls. a3) als wäßrige Lösung eingesetzt, so wird der Wasseranteil dem Reaktionsmedium zugeschlagen.
Die Menge des polymeren Dispergiermittels D) bezogen auf 100 Gew.-Teile Wasser als Reaktionsmedium liegt im allgemeinen zwischen 1 und 50 Gew.-Teilen, bevorzugt zwischen 2 und 40 Gew.-Teilen und besonders bevorzugt zwischen 5 und 30 Gew.-Teilen.
Zum Starten der Polymerisation werden beispielsweise radikalische Initiatoren (= Polymerisationsstarter) oder hochenergetische Strahlung, wie beispielsweise UV-Licht, verwendet. Bevorzugt werden als radikalische Initiatoren beispielsweise 2,2'-Azobisisobutyronitril, 2,2'-Azobis(2-amidopropan)dihydrochlorid (bevorzugt in Dimethylformamid gelöst), Kaliumpersulfat, Ammoniumpersulfat, Wasserstoffperoxid, gegebenenfalls in Kombination mit einem Reduktionsmittel, wie beispielsweise einem Amin oder Natriumsulfid, eingesetzt. Der Anteil an Initiator, bezogen auf das Monomerengemisch a1), a2) und ggfls. a3), liegt gewöhnlich zwischen 10⁻³ und 5 Gew.-%, vorzugsweise zwischen 10⁻² und 1 Gew.-%, wobei der Initiator zu Beginn der Polymerisation vollständig oder teilweise mit nachfolgender Dosierung über den gesamten Polymerisationsverlauf zugegeben werden kann. Ebenso kann das Monomerengemisch a1), a2) und ggfls. a3) vollständig am Anfang der Polymerisation oder teilweise als Zulauf über den gesamten Polymerisationsverlauf hinweg zugegeben werden. Die Polymerisationstemperatur beträgt im allgemeinen zwischen 0 und 100 Grad C, bevorzugt zwischen 30 und 60 Grad C. Vorzugsweise wird unter Inertgas-Atmosphäre, beispielsweise unter Stickstoff-Atmosphäre, polymerisiert. Der Endumsatz der Polymerisation liegt über 98 Gew.-% des eingesetzten Monomerengemisches a1), a2) und ggfls. a3), wofür im allgemeinen zwischen 1 und 8 Stunden Polymerisationsdauer erforderlich sind.
Für eine eventuelle weitere Zugabe des polymeren Dispergiermittels D), das bevorzugt in einer wäßrigen Dispersion eingesetzt wird, zur wäßrigen Dispersion des Polymerisats A) gemäß P 43 16 200.2 können sowohl statische als auch dynamische Mischer verwendet werden. Während erstere durch Erzeugung von Turbulenz wirken, die in dem Flüssigkeitsgemisch beim Durchströmen der Mischer entsteht, wird die Turbulenz bei den dynamischen Mischern aktiv erzeugt (vgl. hierzu beispielsweise Römpps Chemielexikon, 9. Aufl., Seite 2805, Georg Thieme, Suttgart, New York, 1991). Bevorzugt werden Rührer eingesetzt, wie beispielsweise Propeller-, Schrägblatt-, Scheiben-, Impeller-, Kreuzbalken-, Gitter-, Anker-, Schraubenspindel- oder Wendelrührer, wobei ganz besonders bevorzugt Rührer verwendet werden, die beim Rührvorgang ein geringes Schergefälle erzeugen (vgl. hierzu z.B. Römpps Chemielexikon, 9. Aufl., Seiten 3939 bis 3940, Georg Thieme, Stuttgart, New York, 1992). Beim Mischvorgang wird vorzugsweise die wäßrige Dispersion der Polymerisate a) vorgelegt und danach das polymere Dispergiermittel D), das vorzugsweise in wäßriger Dispersion eingesetzt wird, unter Rühren schrittweise zugefügt. Dabei wird die Viskosität des Gemisches ständig kontrolliert. In einer besonders bevorzugten Ausführungsform der Erfindung wird die wäßrige Dispersion des Polymerisats auf 30 bis 90 Grad C, vorzugsweise auf 40 bis 70 Grad C erwärmt, um die Viskosität während des Mischvorgangs möglichst niedrig zu halten.

### 2. Stufe

### Reduktion des Wassergehalts der nach Stufe 1 hergestellten wäßrigen Polymerdispersion PD)

Der Wassergehalt der nach Stufe 1 hergestellten Polymerdispersion PD) wird vorzugsweise durch Verdampfen des Wassers reduziert. Dies kann beispielsweise durch Abdestillieren des Wassers erfolgen, was vorzugsweise bei Unterdruck bzw. im Vakuum durchgeführt wird. Die hierbei verwendeten Destillationsapparate sind bekannt, wie beispielsweise Destillationskolonnen (vgl. hierzu z.B. Kirk-Othmer, Encyclopedia of Chemical Technology, 3rd. Ed. Vol, 7, Seiten 849 bis 891, J. Wiley, New York, 1979). Weitere Verdampfungsaggregate sind beispielsweise Konvektionsverdampfer oder Dünnschichtverdampfer (vgl. hierzu z.B. Kirk-Othmer, Encyclopedia of Chemical Technology, 3rd. Ed., Vol. 9, Seiten 472 bis 493, J. Wiley, New York, 1980). Auch Methoden wie Membrandiffusion oder das Binden von Wasser mit organischen oder anorganischen Reagenzien sind möglich.
Der Wassergehalt der nach Stufe 1 hergestellten Polymerdispersion PD) kann in dem Maße reduziert werden, solange die Viskosität der resultierenden Polymerdispersion mit reduziertem Wassergehalt PD') eine technologisch vernünftige Handhabung zuläßt und solange es die Dispersionsstabilität zuläßt. Im allgemeinen sind Polymerdispersionen PD') mit einem Wirkstoffgehalt von bis zu 50 Gew.-% oder leicht darüber möglich.

### 3. Stufe

### Zugabe des polymeren Dispergiermittels D) in wäßriger Dispersion

Die Zugabe des polymeren Dispergiermittels D) in wäßriger Dispersion erfolgt wie in Stufe 1 gemäß P 43 16 200.2 mit statischen oder dynamischen Mischaggregaten. Wiederum werden bevorzugt Rührer verwendet, die beim Rührvorgang ein geringes Schergefälle verursachen. Beim Mischvorgang wird vorzugsweise die gemäß Stufe 2 des erfindungsgemäßen Verfahrens hergestellte wäßrige Dispersion des Polymerisats A) und des polymeren Dispergiermittels D) mit reduziertem Wassergehalt vorgelegt und danach weitere Anteile des polymeren Dispergiermittels D) in wäßriger Dispersion unter Rühren schrittweise zugefügt, wobei die Viskosität des Gemisches ständig kontrolliert wird. Wie auch in Stufe 1 beschrieben, wird die wäßrige Dispersion gemäß Stufe 2 auf 30 bis 90 Grad C, vorzugsweise auf 40 bis 70 Grad C erwärmt, um die Viskosität während des Mischvorgangs möglichst niedrig zu halten.
Es resultieren Polymerdispersionen PD") mit sehr hohen Wirkstoffgehalten bei vergleichsweise sehr niedriger Viskosität. So kann durch das erfindungsgemäße Verfahren der Wirkstoffgehalt einer Polymerdispersion PD"), der die Summe der Gehalte an Polymerisat A) und an polymerem Dispergiermittel D) darstellt, beispielsweise bei etwa gleichbleibender Viskosität bezogen auf die Viskosität der Polymerdispersion PD) verdoppelt werden.

### Vorteilhafte Wirkungen der Erfindung

Die nach dem erfindungsgemäßen Verfahren hergestellten Polymerdispersionen PD") zeichnen sich gemessen an der Wirkstoffkonzentration, wobei der Wirkstoff aus der Kombination von Polymerisat A) und von Dispergiermittel D) besteht, und des mittleren Molekulargewichts des Polymerisats A) durch eine überraschend niedrige Viskosität aus, im Vergleich zu den Polymerdispersionen PD). Beim Verdünnen der wäßrigen Polymerdispersion PD") steigt die aktuelle Viskosität auf ein sehr hohes Maximum, wobei das System klar wird. Dabei sind die Viskositäten der wäßrigen Polymerisatlösungen bei 1 Gew.-% Polymerisatgehalt auf einem hohen Niveau, wobei das bevorzugt eingesetzte Dispergiermittel D) Poly-DADMAC gleichzeitig als Wirkstoff, d.h. als Störstoffänger bei Kreislaufwasser und zur Unterstützung der Flockenbildung, beispielsweise bei der Klärschlammkoagulation, fungiert. Ein weiteres vorteilhaftes Merkmal der erfindungsgemäßen wäßrigen Polymerdispersionen PD") ist die hohe Scher- und Standstabilität. So bleibt die hohe Viskosität einer wäßrigen Lösung mit 1 Gew.-% Polymerisatgehalt auch nach längerem Rühren weitgehend konstant.
Die Abwesenheit von organischen Lösungsmitteln gewährleistet eine sichere Handhabung (beispielsweise: keine Entflammbarkeit) und eine ökologisch unbedenkliche Verwendung der erfindungsgemäßen Polymerdispersionen PD") beispielsweise als Verdickungsmittel, Flockungshilfsmittel für elektrisch geladene Schwebeteilchen, als Retentionsmittel für die Papierherstellung und/oder als Bodenverbesserungsmittel. In isolierter oder wasserarmer Form kann das erfindungsgemäße Polymerisat als Entwässerungsmittel, beispielsweise im Hygienebereich verwendet werden.

Die folgenden Beispiele sollen die Erfindung erläutern. Die physikalischen Daten wurden anhand folgender Normen bestimmt:
- Dynamische Viskositität η [Pa·s] nach DIN 53 018 / 53 019
- Molekulargewicht M_{w} per Gelpermeationschromatographie (vgl. z.B. H. F. Mark et al.: s.o.) mit Standard Poly(2-Trimethylammoniumethylacrylatchlorid)
- Stammbergewert STB II (S): Bestimmung des zeitlichen Verlaufs der Kaolinsedimentation bei Flockungsmittel-haltigen Lösungen nach dem Flockungsvorgang:
   Pro Liter Leitungswasser (20° DH) werden 20 g Kaolin suspendiert und unter Rühren homogen gehalten.
   Danach werden 250 ml Kaolinsuspension in einen 250 ml-Meßzylinder gefüllt und unter Rühren homogen gehalten.
   Zur Dosierung von 1 ml 0,1 %iger wäßriger Lösung der Polymerdispersion PD" (Wirkstoffgehalt) wird die Rührung unterbrochen.
   Anschließend wird noch 15 sec. gerührt und hiernach die Rührung abgestellt. Danach wird die Zeit für das Absinken des Sedimentationsspiegels um 4 cm im Meßzylinder genommen, welche dem Stammbergewert STBII entspricht.

### BEISPIELE

### Beispiel 1

315,0 g einer 40 %igen wäßrigen Polydiallyldimethylammoniumchlorid-(Poly-DADMAC)-Lösung, 67,5 g Acrylamid, 93,8 g einer 80 %igen wäßrigen 2-Trimethylammoniumethylacrylatchlorid-Lösung, 7,5 g Laurylacrylat und 516,2 g Wasser werden in einem Reaktionsgefäß mit N₂ entgast und unter Rühren auf 53 Grad C erwärmt.
Anschließend werden 0,015 g 2,2'-Azobis[2-(2-imidazolin-2-yl)-propan] (AIP) gelöst in 0,135 g Wasser hinzugefügt. Nach 3 Stunden unter Rühren wird die Temperatur auf 65 Grad C erhöht und weitere 0,15 g AIP gelöst in 1,35 g Wasser zugegeben.
Die Polymerisation ist nach einer weiteren Stunde beendet.

Das System ist durch folgende Größen gekennzeichnet: Die dynamische Viskosität der wäßrigen Polymerdispersion beträgt η₁ = 11550 mPa·s.
Die dynamische Viskosität einer 1 %igen wäßrigen Lösung des Polymerisats beträgt η₂ = 1616 mPa·s.
Der Flockungswert beträgt: STB II = 8,5 s.
Das Molekulargewicht des Polymerisats beträgt M_{w} > 10⁶ Dalton.
Trockengehalt: 27,6 %.

Das fertige Produkt wird durch Zugabe von 98,9 g Poly-DADMAC verdünnt. Die erhaltene Polymerdispersion ist durch folgende Größen gekennzeichnet:
dynamische Viskosität des Produkts: η₁ = 6400 mPa·s dynamische Viskosität einer 1 %igen Lösung des Polymerisats in Wasser: η₂ = 1296 mPa·s.
Flockungswert: STB II = 7,8 s
Trockengehalt: 28,7 %.

Dieser Polymerdispersion wird mittels Vakuumdestillation Wasser entzogen. Die Destillationsbedingungen sind wie in Beispiel 1 angegeben.
Es werden 361,1 g Wasser abgezogen.

Die dann erhaltene Polymerdispersion ist durch folgende Größen gekennzeichnet:
dynamische Viskosität des Produkts: η₁ = 21200 mPa·s dynamische Viskosität einer 1 %igen Lösung des Polymerisats in Wasser: η₂ = 1264 mPa·s.
Flockungswert: STB II = 7,8 s
Trockengehalt: 42,8 %.

Diese Polymerdispersion wird durch Zugabe von 82,0 g Poly-DADMAC verdünnt.
die erhaltene Polymerdispersion ist durch folgende Größen gekennzeichnet:
dynamische Viskosität des Produkts: η₁ = 14120 mPa·s dynamische Viskosität einer 1 %igen Lösung des Polymerisats in Wasser: η₂ = 1136 mPa·s
Flockungswert: STB II = 7,4 s
Trockengehalt: 42,5 %.

### Beispiel 2 (Vergleichsbeispiel)

315,0 g einer 40 %igen wäßrigen Polydiallyldimethylammoniumchlorid-(Poly-DADMAC)-Lösung, 67,5 g Acrylamid, 93,8 g einer 80 %igen wäßrigen 2-Trimethylammoniumethylacrylatchlorid-Lösung, 7,5 g Laurylacrylat und 516,2 g Wasser werden in einem Reaktionsgefäß mit N₂ entgast und unter Rühren auf 53 Grad C erwärmt.
Anschließend werden 0,015 g 2,2'-Azobis[2-(2-imidazolin-2-yl)-propan] (AIP) gelöst in 0,125 g Wasser hinzugefügt. Nach 3 Stunden unter Rühren wird die Temperatur auf 65 Grad C erhöht und weitere 0,15 g AIP gelöst in 1,35 g Wasser zugegeben.
Die Polymerisation ist nach einer weiteren Stunde beendet.

Das System ist durch folgende Größen gekennzeichnet: Die dynamische Viskosität der wäßrigen Polymerdispersion beträgt η₁ = 11550 mPa·s.
Die dynamische Viskosität einer 1 %igen wäßrigen Lösung des Polymerisats beträgt η₂ = 1616 mPa·s.
Der Flockungswert beträgt: STB II = 8,5 s.
Das Molekulargewicht des Polymerisats beträgt M_{w} > 10⁶ Dalton.
Trockengehalt: 27,6 %.

Dem fertigen Produkt wird dann mittels einer Vakuumdestillation Wasser entzogen die Destillationsbedingungen sind:
Druck: 50 - 100 mbar
Temperatur: 70 Grad C
Es werden 226 g Wasser abgezogen

Das dann erhaltene System ist durch folgende Größen gekennzeichnet:
Die dynamische Viskosität der wäßrigen Polymerdispersion beträgt η₁ = 31320 mPa·s.
Die dynamische Viskosität einer 1 %igen wäßrigen Lösung des Polymerisats beträgt η₂ = 1640 mPa·s.
Der Flockungswert beträgt: STB II = 7,4 s.
Trockengehalt: 40,3 %.

### Beispiel 3 (Vergleichsbeispiel)

342,5 g einer 40 %igen wäßrigen Poly-DADMAC-Lösung, 97,0 g Acrylamid, 125,0 g einer 80 %igen wäßrigen 2-Trimethylammoniumethylacrylatchlorid-Lösung, 3,0 g 2-Ethylhexylacrylat und 432,5 g Wasser werden in einem Reaktionsgefäß mit N₂ entgast und unter Rühren auf 56 Grad C erwärmt.
Anschließend werden 0,02 g 2,2'-Azobis[2-(2-imidazolin-2-yl)-propan] (AIP) gelöst in 0,18 g Wasser hinzugefügt. Nach 2 Stunden unter Rühren wird die Temperatur auf 70 Grad C erhöht und weitere 0,2 g AIP gelöst in 1,8 g Wasser zugegeben.
Die Polymerisation ist nach einer weiteren Stunde beendet. Jetzt werden in einem zweiten Schritt 333,0 g Poly-DADMAC in die Polymerdispersion eingerührt.

Das System ist durch folgende Größen gekennzeichnet: Die dynamische Viskiosität der wäßrigen Polymerdispersion
beträgt η₁ = 9080 mPa·s.
Die dynamische Viskosität einer 1 %igen wäßrigen Lösung des Polymerisats beträgt η₂ = 2144 mPa·s.
Der Flockungswert beträgt: STB II = 5,2 s.
Das Molekulargewicht des Polymerisats beträgt M_{w} > 10⁶ Dalton.
Trockengehalt: 35,3 %.

Desm fertigen Produkt wird dann mittels einer
Vakuumdestillation Wasser entzogen.
Die Destillationsbedingungen sind wie in Beispiel 1 angegeben. Es werden 262,9 g Wasser abgezogen.

Die dann erhaltene Polymerdispersion ist durch folgende Größen gekennzeichnet:
dynamische Viskosität des Prdoukts: η₁ = 26560 mPa·s dynamische Viskosität einer 1 %igen wäßrigen Lösung des Polymerisats: η₂ = 2548 mPa·s
Flockungswert: STB II = 5,0 s
Trockengehalt: 44,0 %.

### Beispiel 4 (Vergleichsbeispiel)

472,5 g einer 40 %igen wäßrigen Poly-DADMAC-Lösung, 101,3 g Acrylamid, 140,7 g einer 80 %igen wäßrigen 2-Trimethylammoniumethylacrylatchlorid-Lösung, 11,3 g Laurylacrylat und 274,2 g Wasser werden in einem Reaktionsgefäß mit N₂ entgast und unter Rühren auf 53 Grad C erwärmt.
Anschließend werden 0,022 g 2,2'-Azobis[2-(2-imidazolin-2-yl)-propan] (AIP) gelöst in 0,2 g Wasser hinzugefügt. Der Ansatz verdickt binnen kurzer Zeit derart, daß kein Rühren mehr möglich ist. Der Ansatz wird abgebrochen.

## Patentansprüche

1. Verfahren zur Herstellung niedrigviskoser, wasserlöslicher Polymerdispersionen auf wäßriger Basis mit hoher Wirkstoffkonzentration, enthaltend ein Polymerisat A) aufgebaut aus den monomeren Bestandteilen
a1) 99 bis 70 Gew.-% mindestens eines wasserlöslichen Monomeren,
a2) 1 bis 30 Gew-% mindestens eines hydrophoben Monomeren und
a3) 0 bis 20 Gew.-% mindestens eines amphiphilen Monomeren,
wobei sich die Monomerkomponenten a1), a2) und a3) jeweils zu 100 Gew.-% ergänzen und die Polymerisate A) ein mittleres Molekulargewicht von mindestens 5 x 10⁵ Dalton aufweisen,
dadurch gekennzeichnet,
daß in einer ersten Stufe eine wäßrige Dispersion PD durch Polymerisation der Monomeren a1), a2) und gegebenen falls a3) in Gegenwart mindestens eines polymeren Dispergiermittels D) hergestellt wird, wobei das polymere Dispergiermittel mit dem wasserlöslichen Polymerisat unverträglich ist und ein mittleres Molekulargewicht von 10³-5 · 10⁵ Dalton besitzt und wenigstens eine funktionelle Gruppe, ausgewählt aus Ether-, Hydroxyl-, Carboxyl-, Sulfon-, Sulfatester- Amino-, Amido-, Imido-, tert. Amino- und/oder quaternären Ammoniumgruppen trägt, in einer zweiten Stufe eine wäßrige, konzentrierte Dispersion PD') aus der wäßrigen Dispersion PD) durch Abziehen von Wasser erzeugt wird, sowie in einer dritten Stufe eine wäßrige Dispersion PD") mit hohem Wirkstoffgehalt durch die Zugabe einer wäßrigen Dispersion mindestens eines polymeren Dispergiermittels D) zur konzentrierten Dispersion PD') hergestellt wird.

2. Verfahren zur Herstellung niedrigviskoser, wasserlöslicher Polymerdispersionen auf wäßriger Basis mit hoher Wirkstoffkonzentration gemäß Anspruch 1, dadurch gekennzeichnet, daß im Anschluß an das Verfahren gemäß Anspruch 1 die zweite und die dritte Verfahrensstufe sukzessiv mindstens ein Mal wiederholt werden.

3. Verfahren zur Herstellung niedrigviskoser, wasserlöslicher Polymerdispersionen auf wäßriger Basis mit hoher Wirkstoffkonzentration gemäß den Ansprüchen 1 und 2, dadurch gekennzeichnet, daß das Dispergiermittel D) ein Polyelektrolyt mit einem Molekulargewicht M_{w} von weniger als 5 x 10⁵ Dalton ist.

4. Verfahren gemäß den Ansprüchen 1 bis 3, dadurch gekennzeichnet, daß mindestens eines der wasserlöslichen Monomeren a1) mindestens eine ionische Gruppe aufweist.

5. Verfahren gemäß den Ansprüchen 1 bis 4, dadurch gekennzeichnet, daß das hydrophobe Monomere a2) eine Verbindung der Formel I ist: 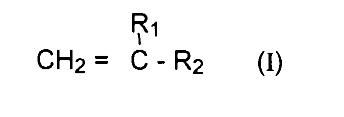 wobei
R₁ = Wasserstoff oder Alkyl mit 1 bis 4 Kohlenstoffatomen und
R₂ = Alkyl mit 1 bis 4 Kohlenstoffatomen, Cycloalkyl mit 5 bis 12 Kohlenstoffatomen, Aryl mit 6 bis 12 Kohlenstoffatomen, oder 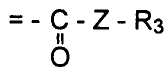 mit R₃ = Alkyl mit 1 bis 8 Kohlenstoffatomen, Cycloalkyl mit 5 bis 12 Kohlenstoffatomen oder Aryl mit 6 bis 12 Kohlenstoffatomen und Z = O, NH oder NR₃
sind.

6. Verfahren gemäß den Ansprüchen 1 bis 5, dadurch gekennzeichnet, daß das amphiphile Monomere a3) eine Verbindung der Formel II ist: 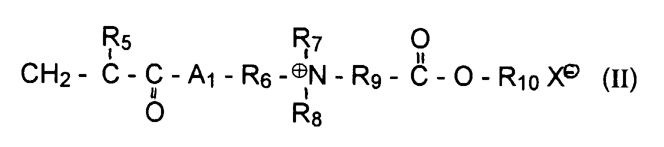 wobei
A₁ = O, NH, NR₄ mit R₄ für Alkyl mit 1 bis 4 Kohlenstoffatomen
R₅ = Wasserstoff oder Methyl
R₆ = Alkylen mit 1 bis 6 Kohlenstoffatomen,
R₇ und R₈ = unabhängig voneinander Alkyl mit 1 bis 6 Kohlenstoffatomen
R₉ = Alkylen mit 1 bis 6 Kohlenstoffatomen
R₁₀ = Alkyl, Aryl und/oder Aralkyl mit 8 bis 32 Kohlenstoffatomen und
X = Halogen, Pseudohalogen, Acetat oder SO₄CH₃
sind.

7. Verfahren gemäß den Ansprüchen 1 bis 5, dadurch gekennzeichnet, daß das amphiphile Monomere a3) eine Verbindung der Formel III ist: 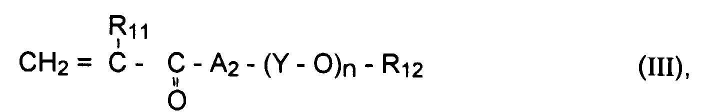 wobei
A₂ = O, NH, NR₁₃ mit R₁₃ = Alkyl mit 1 bis 4 Kohlenstoffatomen
R₁₁ = Wasserstoff oder Methyl
R₁₂ = Alkylrest, Arylrest und/oder Aralkylrest mit 8 bis 32 Kohlenstoffatomen
Y = Alkylen mit 2 bis 6 Kohlenstoffatomen und
n = eine ganze Zahl zwischen 1 und 50
sind.

8. Verfahren gemäß den Ansprüchen 1 bis 7, dadurch gekennzeichnet, das das Dispergiermittel D) ein Polyalkylenether ist, wobei die Alkylengruppe 2 bis 6 Kohlenstoffatome aufweist.

9. Verwendung der mittels der Verfahren gemäß den Ansprüchen 1 bis 8 hergestellten Polymerdispersionen als Flockungsmittel für elektrisch geladene Schwebeteilchen, als Retentionsmittel für die Papierherstellung, als Verdickungsmittel, als Entwässerungsmittel und/oder als Bodenverbesserungsmittel.

## Claims

1. A process for the production of low-viscosity, water-soluble polymer dispersions on an aqueous basis with a high concentration of active ingredients, containing a polymer A) comprising the monomer components
a1) 99 to 70% by weight of at least one water-soluble monomer,
a2) 1 to 30% by weight of at least one hydrophobic monomer and
a3) 0 to 20% by weight of at least one amphiphilic monomer,
wherein the monomer components a1), a2) and a3) add up to 100% by weight and the polymer A) has an average molecular weight of at least 5 x 10⁵ Daltons,
characterised in that in a first stage an aqueous dispersion PD) is produced by polymerisation of the monomers a1), a2) and optionally a3) in the presence of at least one polymeric dispersing agent D), wherein the polymeric dispersing agent is not compatible with the water-soluble polymer and has an average molecular weight of 10³ - 5·10⁵ Daltons, and supports at least one functional group, selected from ether, hydroxyl, carboxyl, sulphone, sulphate ester, amino, amido, imido, tert. amino and/or quaternary ammonium groups, in a second stage an aqueous concentrated dispersion PD') is created from the aqueous dispersion PD) by the removal of water, and in a third stage an aqueous dispersion PD") with a high active ingredient content is produced by addition of an aqueous dispersion of at least one polymeric dispersing agent D) to the concentrated dispersion PD').

2. A process for the production of low-viscosity, water-soluble polymer dispersions on an aqueous basis with high concentrations of active ingredient according to claim 1, characterised in that in addition to the process according to claim 1, the second and third process stages are repeated successively at least once.

3. A process for the production of low-viscous, water-soluble polymer dispersions on an aqueous basis with a high concentration of active ingredient according to claims 1 and 2, characterised in that the dispersing agent D) is a polyelectrolyte with a molecular weight M_{w} of less than 5 x 10⁵ Daltons.

4. A process according to claims 1 to 3, characterised in that at least one of the water-soluble monomers a1) has at least one ionic group.

5. A process according to claims 1 to 4, characterised in that the hydrophobic monomer a2) is a compound of formula I: 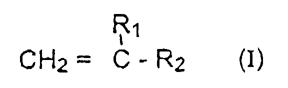 wherein
R₁ = hydrogen or alkyl with 1 to 4 carbon atoms and
R₂ = alkyl with 1 to 4 carbon atoms, cycloalkyl with 5 to 12 carbon atoms, aryl with 6 to 12 carbon atoms, or 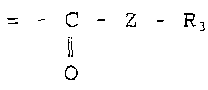 wherein R₃ = alkyl with 1 to 8 carbon atoms, cycloalkyl with 5 to 12 carbon atoms or aryl with 6 to 12 carbon atoms and Z = O, NH or NR₃.

6. A process according to claims 1 to 5, characterised in that the amphiphilic monomer a3) is a compound of formula II: 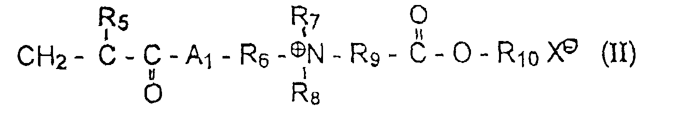 wherein
A₁ = O, NH, NR₄ wherein R₄ is alkyl with 1 to 4 carbon atoms
R₅ = hydrogen or methyl
R₆ = alkylene with 1 to 6 carbon atoms,
R₇ and R₈ = independently of one another, alkyl with 1 to 6 carbon atoms
R₉ = alkylene with 1 to 6 carbon atoms
R₁₀ = alkyl, aryl and/or aralkyl with 8 to 32 carbon atoms and
X = halogen, pseudohalogen, acetate or SO₄CH₃

7. A process according to claims 1 to 5, characterised in that the amphiphilic monomer a3) is a compound of formula III: 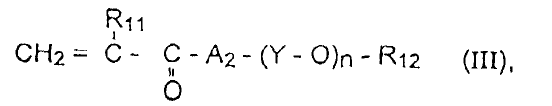 wherein
A₂ = O, NH, NR₁₃ wherein R₁₃ = alkyl with 1 to 4 carbon atoms
R₁₁ = hydrogen or methyl
R₁₂ = alkyl group, aryl group and/or aralkyl group with 8 to 32 carbon atoms
Y = alkylene with 2 to 6 carbon atoms
n = an integer between 1 and 50.

8. A process according to claims 1 to 7, characterised in that the dispersing agent D) is a polyethylene ether, wherein the alkylene group has 2 to 6 carbon atoms.

9. Use of a polymer dispersion produced according to the process according to claims 1 to 8 as a flocculation agent for electrically-charged suspended particles, as a retention means for paper production, as a thickening agent, as a desiccation agent and/or as a soil improvement agent.

## Revendications

1. Procédé de fabrication de polymères basse viscosité solubles dans l'eau à base aqueuse à concentration élevée de matière active, contenant un polymère A) constitué des constituants monomères :
a1) de 99 à 70 % en poids d'au moins un monomère soluble dans l'eau,
a2) de 1 à 30 % en poids d'au moins un monomère hygrophobe, et
a3) de 0 à 20 % en poids, d'au moins un monomère amphiphile, les composants monomères a1), a2) et a3) se complétant à 100 % et les polymères A) présentant un poids moléculaire moyen d'au moins 5 x 10⁵ dalton,
caractérisé en ce que
- dans la première étape on fabrique une dispersion aqueuse PD) par polymérisation des monomères a1), a2) et le cas échéant a3), en présence d'au moins un dispersant polymère D), le dispersant polymère étant incompatible avec le polymère soluble dans l'eau, et présentant un poids moléculaire moyen de 10³ - 5 x 10⁵ dalton, et portant au moins un groupe fonctionnel choisi parmi les groupes éther, hydroxyle, carboxyle, sulfone, ester de sulfate, amino, amido, imido, tert.-amino, et/ou ammonium qunternaire,
- dans une seconde étape con produit une dispersion aqueuse concentrée PD') à partir de la dispersion aqueuse PD) en retirant de l'eau, et
- dans une troisième étape, on produit une dispersion aqueuse PD') à haute teneur en matière active par addition d'une dispersion aqueuse d'au moins un dispersant polymère D) à la dispersion concentrée PD).

2. Procédé de fabrication de dispersions de polymère solubles dans l'eau basse viscosité à base aqueuse à haute concentration de matière active, selon la revendication 1,
caractérisé en ce qu'
après le procédé selon la revendication 1, on réalise de façon répétée au moins une fois, successivement la seconde et la troisième étape du procédé.

3. Procédé de fabrication de dispersions de polymère solubles dans l'eau basse viscosité à base aqueuse, à concentration élevée de matière active, selon les revendications 1 et 2,
caractérisé en ce que
le dispersant D) est un polyélectrolyte ayant un poids moléculaire moyen M_{w} inférieur à 5 x 10⁵ dalton.

4. Procédé selon les revendications 1 à 3,
caractérisé en ce qu'
au moins un des monomères a1) solubles dans l'eau présente au moins un groupe ionique.

5. Procédé selon les revendications 1 à 4,
caractérisé en ce que
le monomère hydrophobe a2) est un composé de formule I : 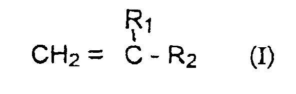 dans laquelle R₁ représente un hydrogène ou un alkyle ayant de 1 à 4 atomes de carbone, et
R₂ représente un alkyle ayant de 1 à 4 atomes de carbone, un cycloalkyle ayant de 5 à 12 atomes de carbone, un aryle ayant de 6 à 12 atomes de carbone, ou 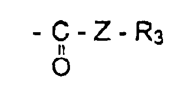
avec R₃ représentant un alkyle ayant de 1 à 8 atomes de carbone, cycloalkyle ayant de 5 à 12 atomes de carbone, ou aryle ayant de 6 à 12 atomes de carbone, et Z représentant O, -NH ou -NR₃.

6. Procédé selon les revendications 1 à 5,
caractérisé en ce que
le monomère amphiphile a3) est un composé de formule II : 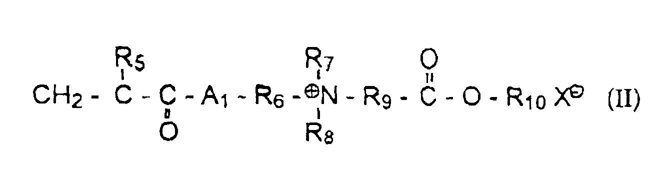 dans laquelle A₁ représente O, NH, NR₄, avec R₄ représentant un alkyle ayant de 1 à 4 atomes de carbone,
R₅ représente un hydrogène ou un méthyle,
R₆ représente un alkylène ayant de 1 à 6 atomes de carbone,
R₇ et R₈ représentent indépendamment l'un de l'autre un alkyle ayant de 1 à 6 atomes de carbone,
R₉ représente un alkylène ayant de 1 à 6 atomes de carbone,
R₁₀ représente un alkyle, aryle et/ou aralkyle ayant de 8 à 32 atomes de carbone,
et X représente un halogène, un pseudo-halogène, un acetate ou SO₄CH₃.

7. Procédé selon les revendications 1 à 5,
caractérisé en ce que
le monomère amphiphile a3) est un composé de formule III : 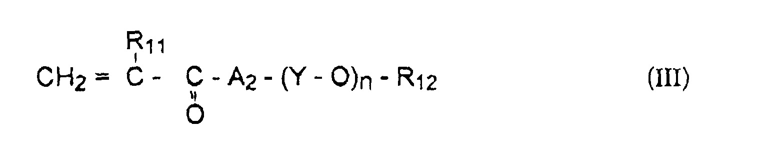 dans laquelle A₂ représente O, NH, NR₁₃, avec R₁₃ représentant un alkyle ayant de 1 à 4 atomes de carbone,
R₁₁ représente un hydrogène ou un méthyle,
R₁₂ représente Un radical alkyle, un radical aryle et, ou un radical aralkyle ayant de 8 à 32 atomes de carbone,
Y est un alkylène ayant de 2 à 6 atomes de carbone, et
n est un nombre entier compris entre 1 et 50.

8. Procédé selon les revendications 1 à 7,
caractérisé en ce que
le dispersant D) est un polyalkylène-éther, où le groupe alkylène présente de 2 à 6 atomes de carbone.

9. Utilisation des dispersions de polymère obtenues selon les procédés des revendications 1 à 6, comme agent de floculation pour particules en suspension électriquement chargées, comme agent de rétention pour la fabrication du papier, comme épaississant, comme agent déshydratant et/ou comme agent d'amélioration des sols.
